(19) Europäisches Patentamt
European Patent Office
Office européen des brevets

(11) **EP 2 128 603 A1**

(12) **EUROPEAN PATENT APPLICATION**

(43) Date of publication:
**02.12.2009 Bulletin 2009/49**

(51) Int Cl.:
**G01N 21/84** (2006.01)   **G01B 11/06** (2006.01)

(21) Application number: **08009845.2**

(22) Date of filing: **29.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Applied Materials, Inc.**
**Santa Clara, CA 95054 (US)**

(72) Inventor: **Schröder, Jürgen**
**63538 Großkrotzenburg (DE)**

(74) Representative: **Bockhorni & Kollegen**
**Elsenheimerstrasse 49**
**80687 München (DE)**

Remarks:
Amended claims in accordance with Rule 137(2) EPC.

(54) **A method for determining an optical property of an optical layer**

(57) The invention relates to a method for determining an optical property of an optical layer, comprising detecting (101) a transmission value or a transmission spectrum and a reflection value or a reflection spectrum of the optical layer, and determining (103) the optical property based on the transmission value or the transmission spectrum, the reflection value or the reflection spectrum and a model of the optical layer.

Fig. 1

**EP 2 128 603 A1**

**Description**

The present invention relates to determining the thickness and optical properties of optical layers.

Current solar cells are comprised of one or plural optical layers, whose optical properties significantly influence the possible energy generation. One of the optical layers is the absorption layer, which is often made of silicon (Si). For the absorption layer, the energy band gap, or its position is a substantial parameter, since it determines which spectral ranges of the sunlight are absorbed, and which are not absorbed. In order to assure the required quality of large surface solar cells, the energy band gap and other absorption properties therefore have to comply with particular requirements with respect to the absorption spectra.

The position of the energy of the band gap can be influenced e.g. by performing the coating process, which is used for forming the absorption layer, in a suitable manner. Said energy position particularly depends on the crystal structure of the silicon used, so that e.g. for thin layer solar cells, a mix ratio between an amorphous silicon and a microcrystalline silicon can be adjusted by means of one or plural coating process parameters, so that the energy position of the optical band gap corresponds to a target value. The mix ratio of amorphous and microcrystalline silicon can e.g. be determined by Raman-Spectroscopy.

For direct determination of the energy band gap, the spectral distribution of the refractory index $n(\lambda)$ and of the extinction coefficient $k(\lambda)$ can be determined e.g. from an optical measurement with an ellipsometer, wherein $\lambda$ characterizes the wavelength.

The disadvantage of the known concepts for determining the energy gap is that they can often only be performed on geometrically small samples in a lab. Since current production samples are too large for such measurements, they have to be cut before, which necessitates an additional process step. Furthermore, a large number of measurements is necessary, in order to prove the required process uniformity, which is time consuming under lab conditions.

In the context of the determining properties of coatings deposited on large areas EP1632746 and US 2006/0007430 are relevant. The focus of the computations disclosed therein is to determine the layer thickness or the layer thickness distribution, wherein additionally changes in the optical layer properties, like e.g. of the spectral distribution of the refraction index $n(\lambda)$ and of the extinction coefficient of $k(\lambda)$ can be considered through constants, which are the same for all waves lengths. Therefore, the existing functions $n(\lambda)$ and $k(\lambda)$ only go through an ordinate shift. The constants used for all wavelengths of a measured spectral range, however, consider their optical band gap, which is located within a measured spectral range and whose energy position can differ from measuring point to measuring point, the energy position shift caused thereby on an abscissa cannot differ.

Thus it is the object of the invention to provide a more proficient concept for determining an optical property e.g. of an energy band gap of an optical layer.

This object is accomplished by the features of the independent claims Advantageous embodiments are provided in the dependent claims.

The present invention is based on the finding that the optical models of the optical layers, which are used in the context of the known method for determining the energy band gap, like e.g. Tauc-Lorentz Model, can also be used for determining the energy band gap based on a spectral photometric measurement. According to the invention the position of the energy band gap can e.g. be determined based on a measurement of a spectral transmission value $T(\lambda)$ and of a spectral reflection value $R(\lambda)$ using an optical model of an optical layer. If the model of the optical layer can e.g. parameterized thus by a change of one or several parameters e.g. the respective energy band gap can be determined, which can be associated with the respective transmission and/or reflection value and which most closely corresponds to the detected values. The optical property can e.g. be determined based on a minimization task using the model of the optical layer.

In order to detect the transmission value and the reflection value e.g. a measuring system which measures in two dimension can be used to prove the optical homogeneity of large area coatings with a surface area of e.g. more than 1 m$^2$. A measurement system of this type can e.g. determine the spectral transmission $T(\lambda)$ and the spectral reflection $R(\lambda)$ as well as additional layer properties, like e.g. the color spectrum or the energy position of transmission- and reflection-maxima and -minima. According to the invention a measurement system of said type can also be used for determining the optical energy band gap, so that the measurements neither have to be performed with an ellipsometer, nor the transmission measurement has to be performed under the Brewster-angle. Instead e.g. a spectral photometer is used for measuring the transmission $T(\lambda)$ and the reflection $R(\lambda)$. The measurement data can be stored e.g. for any location that is being measured wherein e.g. a computer program reads in the spectral data for each location and feeds it to a suitable optical model, based on which e.g. the layer thickness d, the spectral distribution $n(\lambda)$, the spectral distribution $K(\lambda)$ and the optical energy band gap or its position are determined as optical properties. The detection of the optical property based on the optical model of the optical layer can e.g. be performed by means of a fit-software. Thus the method according to the invention can e.g. be implemented through an expansion of a system, which measures in two dimensions for proofing the optical homogeneity of large area coatings, with a location resolved determination of the optical energy band gap as an additional parameter

For determining the optical properties e.g. of solar absorption layers which are deposited on a large area, ellipsometers with large scanning tables can be used. However, it is disadvantageous that a measurement with an ellipsometer requires more time than a measurement with a spectral photometer. Furthermore, ellipsometers are more expensive than spectral photometers and they require a higher precision when adjusting a sample, which is time consuming and error prone.

The invention relates to a method for determining an optical property of an optical layer including the detection of a transmission value or a transmission spectrum, and a reflection value or a reflection spectrum of the optical layer and for determining the optical property based on the transmission value or the transmission spectrum, the reflection value or the reflection spectrum and a model of the optical layer.

According to an embodiment the optical property is an energy band gap, or its position, or an absorption coefficient, or an extinction coefficient, or a refractory index, or a layer thickness.

According to an embodiment the transmission value or the transmission spectrum and/or the reflection value, or the reflection spectrum can be detected by a spectral-photometric measurement.

According to an embodiment the transmission value or the transmission spectrum and /or the reflection value or the reflection spectrum can be detected in a predetermined range of the optical layer.

According to an embodiment the transmission value or the transmission spectrum and the reflection value or the reflection spectrum can be detected in a predetermined portion of the optical layer, wherein an additional transmission value or an additional transmission spectrum an additional reflection value or an additional reflection spectrum are detected in an additional predetermined portion of the optical layer, wherein a distribution, in particular a local distribution of the optical property is determined based on the transmission values or the transmission spectra and the reflection values or the reflection spectra.

According to an embodiment the optical layer is a solar absorption layer.

According to an embodiment an optimization method is used for determining the optical property, in particular a non linear optimization method using the model of the optical layer.

According to an embodiment a theoretical reflection value or a theoretical reflection spectrum and a theoretical transmission value or a theoretical transmission spectrum are determined, wherein for determining the optical property a minimum of an evaluation function is determined, which is related to the model of the optical layer, using the theoretical reflection value or the theoretical reflection spectrum, the theoretical transmission value or the theoretical transmission spectrum, the detected reflection value or the detected reflection spectrum and the detected transmission value or the detected transmission spectrum.

According to an embodiment the model of the optical layer is a parameterizable optical model or an Urbach-model or a Tauc-model or a Tauc-Lorentz-model or a Foroui-Bloomer-model or a Dasgupta-model or an O'Leary-model or a Cody-Lorentz-model.

The invention furthermore relates to a device for determining and optical property of an optical layer by a detection means, in particular a spectral photometer for detecting a transmission value or a transmission spectrum or reflection value or refraction spectrum of the optical layer and a processor for determining the optical property based on the transmission value or the transmission spectrum, the reflection value or a reflection spectrum and a model of the optical layer.

According to an embodiment the program of the processor is configured to perform the method according to the invention.

The method furthermore relates to a computer program for performing the method according to the invention, when the computer program is executed on a computer.

The invention furthermore relates to a program driven device, which is configured to execute the computer program for performing the method according to the invention.

Further embodiments are described with reference to the appended drawings. It is shown in:

Fig. 1 a flow chart of a method for determining an optical property;

Fig. 2 an assembly for determining an optical property;

Fig. 3 a distribution of an extinction coefficient as a function of energy; and

Fig. 4 a measurement pattern.

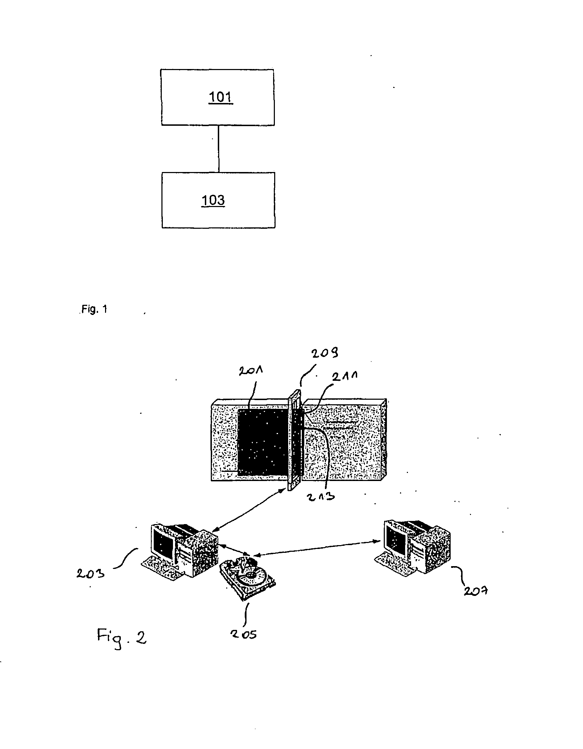

For determining an optical property of an optical layer as shown in Fig. 1, initially a transmission and a reflection of the optical layer are detected in step 101, wherein said detection can be performed in parallel or in series. In the subsequent step 103 the optical property, e.g. an energy band gap and/or an extinction coefficient and/or a refractory index and/or a layer thickness are determined based on the transmission, the reflection and on a model of the optical layer. The model of the optical layer is preferably an optical model, which can e.g. be characterized by an evaluation function, so that the optical property can be determined e.g. by the minimizing the evaluation function.

For determining the optical property in particular the mathematical non linear optimization methods or optimization algorithms can be used, like e.g. the Simplex-method of Nelder and Mead, the Powell Algorithm or an optimization by a genetic algorithm.

As a matter of principle, the non linear optimization is based on finding a minimum for an evaluation function, which is determined e.g. by the sum of deviation squares between measured refraction- and/or transmission values and e.g. theoretically computed reflection- and/or transmission values. The theoretical reflection and/or transmission values can be illustrated e.g. as a function of the absorption coefficient, the refractory index, the layer thickness, or e.g. the energy band gap. Preferably e.g. a target layer thickness can be selected for the optimization method using non linear optimization algorithms e.g. a target layer thickness, or a start value or an initial value can be predetermined, wherein the initial values can be e.g. 80, 100, 120, 180 and 200 nm.

Fig 2 shows an assembly for determining an optical property of an optical layer 201 using a measurement computer 203, which comprises a local data memory 203 and an analysis computer 207. The analysis computer 207 can be a separate computer and can be different computer from the measurement computer 203. According to an embodiment, however the functionality according to the invention of the measurement computer 203 and of the analysis computer 207 can be implemented in a singly computer.

The optical layer 201 is fed e.g. to a spectral photometer 209, which comprises a transmission port 211 and a reflection port 213. The measurement computer 203 is provided to control the measurement process and to store the measured spectral transmission values (T$\lambda$) and the reflection values R ($\lambda$), e.g. while using the local data memory 205.

The local data memory 205 can e.g. be installed in the hardware of the measurement computer 203. According to an embodiment the local data memory 205, however, can be portable and can be connected to the analysis computer 207. Furthermore the measurement computer 203 and the analysis computer 207 can e.g. communicate amongst each other using a network.

For detecting the optical property, the analysis computer 207 retrieves the measured spectral values T ($\lambda$) and R($\lambda$) and computes the optical property based thereon using an optical model , wherein said property is e.g. the layer thickness, the spectral distribution of the refractory index n($\lambda$), the spectral distribution of the absorption index K($\lambda$), and the optical band gap (OBG). The analysis computer 207 is provided e.g. to execute a software, which is configured for determining the spectral distributions n($\lambda$), k($\lambda$) and the optical energy band gap Eg.

The measurement of the optical property will preferably be performed based on an optical model of the optical layer, e.g. based on the Tauc-Lorentz-Model, which is described in the publication by F. Jellison and Modene: "Parameterization of the optical functions of amorphous materials in the inter band region", Applied Physics Letters 69 (3), July 15, 1996 and Applied Physics Letters, September 13, 1996. The Tauc-Lorentz-model is mathematically defined as follows:

$$\varepsilon_1(E) = \varepsilon_{TL}(\infty) + \frac{ACa_{\ln}}{2\pi\zeta^4\alpha E_0}\ln\frac{E_0^2 + E_g^2 + \alpha E_g}{E_0^2 + E_g^2 - \alpha E_g}$$

$$- \frac{Aa_{a\tan}}{\pi\zeta^4 E_0}\left[\pi - \arctan\frac{2E_g + \alpha}{C} + \arctan\frac{-2E_g + \alpha}{C}\right]$$

$$+ \frac{2AE_0}{\pi\zeta^4\alpha}\left\{E_g(E^2 - \gamma^2)\cdot\left[\pi + 2\arctan\left(2\cdot\frac{\gamma^2 - E_g^2}{\alpha C}\right)\right]\right\}$$

$$- \frac{AE_0 C}{\pi\zeta^4}\cdot\frac{E^2 + E_g^2}{E}\cdot\ln\left(\frac{|E - E_g|}{E + E_g}\right)$$

$$+ \frac{2AE_0 C}{\pi\zeta^4}E_g\cdot\ln\left(\frac{|E - E_g|\cdot(E + E_g)}{\sqrt{(E_0^2 - E_g^2)^2 + E_g^2 C^2}}\right)$$

$$\varepsilon_2(E) = \left[ \frac{AE_0 C(E - E_g)^2}{(E^2 - E_0^2) + C^2 E^2} \cdot \frac{1}{E} \right] \quad \text{for} \quad E > E_g$$

$$\varepsilon_2(E) = 0 \qquad\qquad \text{for} \quad E \le E_g$$

$$a_{\ln} = (E_g^2 - E_0^2)E^2 + (E_g^2 C^2) - E_0^2(E_0^2 + 3E_g^2)$$

$$a_{a\tan} = (E^2 - E_0^2)(E_0^2 + E_g^2) + (E_g^2 C^2)$$

$$\zeta^4 = (E^2 - \gamma^2)^2 + \frac{\alpha^2 C^2}{4}$$

$$\alpha = \sqrt{4E_o^2 - C^2}$$

$$\gamma = \sqrt{E_0^2 - \frac{C^2}{2}}$$

Thus, $\varepsilon_1(E)$ and $\varepsilon_2(E)$ designate the real part and imaginary part of a dielectric constant, E is the energy of the electromagnetic wave, where E [eV] = 1240/$\lambda$ [nm], $\varepsilon_\infty$ designates the real part of the dielectric function for large wave lengths with $\lambda \to \infty$, A is the amplitude of a Tauc-Lorentz-oscillator, C is the width of the Tauc-Lorentz-oscillator, and Eo designates a coefficient of the Tauc-Lorentz oscillator, which comprises a ratio of the mean wavelength to the mean energy. Furthermore, Eg describes the energy of the band gap, wherein the following holds, if no absorption occurs: E $\le$ Eg for $\varepsilon_2$ = 0. Furthermore, the following holds: $\varepsilon_1 = n^2 - k^2$ and $\varepsilon_2 = 2nk$.

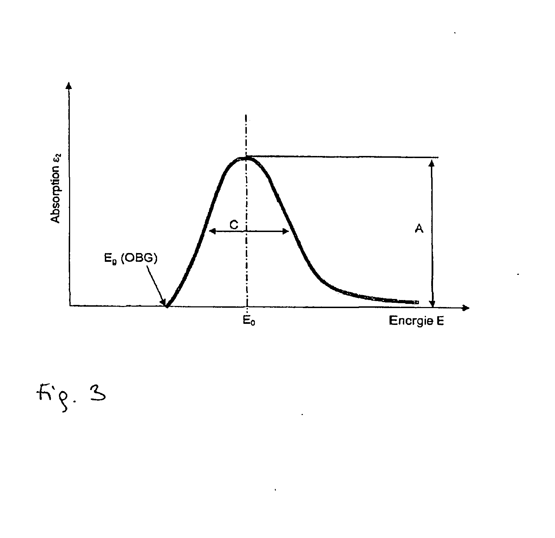

Fig. 3 emphasizes the absorption distribution $\varepsilon_2$ depending on the energy E, wherein the position of the energy band gap Eg is indicated by an arrow. Based on the distribution illustrated in Fig. 3, the position of the energy band gap and its displacement can e.g. be considered depending on optionally selectable parameters of the optical model.

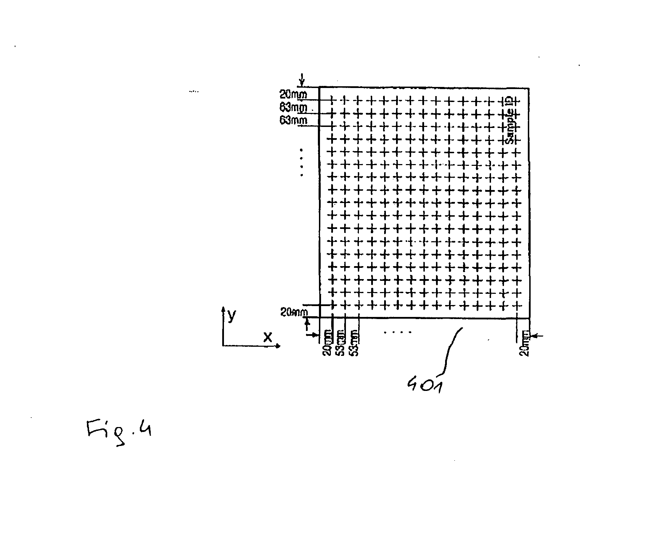

Fig. 4 emphasizes predetermined measuring points for detecting T($\lambda$) and R($\lambda$) on a glass pane (401), whose dimensions are e.g. 1100 x 1300 mm. The measuring points simultaneously determine a measuring pattern, comprising e.g. 441 data points, which are e.g. offset by 63 mm in the direction of the Y-axis illustrated in Fig. 4, and offset by 53 mm in the direction of the X-axis. The exterior measurement points are offset e.g. by 20 mm from the edge of the glass pane. With the measurement assembly illustrated in Fig. 4, the measuring time can e.g. be 15 min.

For determining the optical property, the measurement or control computer 203 illustrated in Fig. 2 can initially determine e.g. the measurement points illustrated in Fig. 4 for the large area measurement system, which is being used. Furthermore, additional measurement parameters can be defined for transmission and reflection measurements, like e.g. a particular scan speed or a particular scan precision. The analysis- or processing computer 207, which is used for OGB determination, there while is e.g. in a standby condition.

It is possible e.g. with the assembly illustrated in Fig. 2 to perform a single measurement of $T(\lambda)$ and $R(\lambda)$ manually in a particularly interesting portion of the layer to be measured, wherein e.g. information with respect to the measurement is called up in the processing computer 207 and substrate data is loaded, which relate to the optical layer. For processing purposes, a relevant spectral range can furthermore be predetermined at the processing computer 207, wherein the processing can e.g. be performed using the previously mentioned fit-software. Subsequently, the result thus obtained is subjected to an evaluation, in order to determine, if the theoretically calculated spectral distribution or spectral value differs from the measurement result, and what size the difference may be. Thus, differences, which are e.g. smaller than 0.5%, can become negligible. It may be possible to improve the measurement concept by effectuating a change, which causes a smaller difference between the theoretically computed spectral value and the measurement result. Furthermore, the spectral value can be changed.

In an additional step, an additional measurement $T(\lambda)$ and $R(\lambda)$ can be manually performed, e.g. by means of the measurement computer 203, in another area of interest, wherein processing of the measurement results is performed at the analysis computer 207 for the additional location(s), using the fit-software, wherein each result is described as mentioned above.

In an additional step, an automatic measurement can be initiated e.g. by means of a measurement computer 203, wherein the previously programmed measurement points are sequentially approached, and wherein $T(\lambda)$ and $R(\lambda)$ are measured at predetermined locations. Thereafter, the analysis computer 207 can begin automatic processing, thus it is being initially monitored, if e.g. an expected spectral pair $T(\lambda)$ is present for a measurement point, e.g. for a first measurement point. If the result of the test is positive, $T(\lambda)$ and $R(\lambda)$ can be loaded, wherein the processing is performed according to a measurement concept. Thus, e.g. the layer thickness and/or the energy band gap Eg can be determined for said point. Additionally, $\varepsilon_\infty$, A, C, and $E_0$ can be computed. Subsequently, it can be monitored, if a next expected spectral pair $T(\lambda)$ and $R(\lambda)$ is present, wherein the above described method is continued until the last predetermined measurement point has been considered. The results of the processing can e.g. be stored in the analysis computer 207. Finally, the measurement computer 203 and the analysis computer 207 can be put into a standby mode until another sample is being measured.

The method according to the invention can e.g. be used to determine the optical band gap at solar absorption layers, deposited on a large area. Thus, the exemplary large area measurement system illustrated in Fig. 2 can e.g. be used for determining the spectral transmission $T(\lambda)$ and the reflection $R(\lambda)$, which measures said values in predetermined portions of the optical layer.

**Claims**

1. A method for determining an optical property of an optical layer, comprising:

   detecting (101) a transmission value or a transmission spectrum and a reflection value or a reflection spectrum of the optical layer; and
   determining (103) the optical property based on the transmission value or the transmission spectrum, the reflection value or the reflection spectrum, and a model of the optical layer.

2. A method according to claim 1, wherein the optical property is an energy band gap or an absorption coefficient or an extinction coefficient or a refractory index or a layer thickness.

3. A method according to one of the preceding claims, wherein the transmission value or the transmission spectrum and/or the reflection value or the reflection spectrum are detected by a spectral photometric measurement.

4. A method according to one of the preceding claims, wherein the transmission value or the transmission spectrum and/or the reflection value or the reflection spectrum are detected in a predetermined portion of the optical layer.

5. A method according to one of the preceding claims, wherein the transmission value or the transmission spectrum and the reflection value or the reflection spectrum are detected in a predetermined portion of the optical layer, wherein an additional transmission value or an additional transmission spectrum and an additional reflection value or an additional transmission spectrum are detected in another predetermined portion of the optical layer, and wherein a distribution, in particular a local distribution of the optical property is determined based on the transmission values or the transmission spectra and the reflection values or the reflection spectra.

6. A method according to one of the preceding claims, wherein the optical layer is a solar absorption layer.

7. A method according to one of the preceding claims, wherein an optimization method, in particular a nonlinear optimization method, is performed using the model of the optical layer for determining the optical property.

8. A method according to one of the preceding claims, wherein based on the model of the optical layer, a theoretical reflection value or a theoretical reflection spectrum and a theoretical transmission value or a theoretical transmission spectrum are determined, and wherein for determining the optical property, a minimum of an evaluation function, which is associated with the model of the optical layer, is determined, using the theoretical reflection value or the theoretical reflection spectrum, the theoretical transmission value or the theoretical transmission spectrum, the detected reflection value or the detected reflection spectrum and the detected transmission value or the detected transmission spectrum.

9. A method according to one of the preceding claims, wherein the model of the optical layer is an optical model, which can parameterized, or a Urbach-model, or a Tauc-model, or a Tauc-Lorentz-model or a Forouhi-Bloomer-model or a Dasgupta-model or an O'Leary model, or a Cody-Lorentz-model.

10. A device for determining an optical property of an optical layer, comprising:

a detection means, in particular a spectral photometer, for detecting a transmission value or a transmission spectrum and a reflection value or a reflection spectrum of the optical layer; and
a processor for determining the optical property based on the transmission value or the transmission spectrum, the reflection value or the reflection spectrum and a model of the optical layer.

11. A method according to claim 10, wherein the processor is programmed and configured to perform the method according to one of the claims 1 through 9.

12. A computer program for performing the method according to one of the claims 1 through 9, when the computer program is executed in a computer.

13. A programmed apparatus, which is configured to execute a computer program for performing the method according to one of the claims 1 through 9.


**Amended claims in accordance with Rule 137(2) EPC.**

1. A method for determining an optical property of an optical layer for a large surface area, comprising:

detecting (101) a transmission value or a transmission spectrum and a reflection value or a reflection spectrum of the optical layer; and
determining (103) the optical property based on the transmission value or the transmission spectrum, the reflection value or the reflection spectrum, and a parameterisable optical model of the optical layer.

9. A method according to one of the preceding claims, wherein the model of the optical layer is a Urbach-model, or a Tauc-model, or a Tauc-Lorentz-model or a Forouhi-Bloomer-model or a Dasgupta-model or an O'Leary model, or a Cody-Lorentz-model.

10. A device for determining an optical property of an optical layer for a large surface area, comprising:

a detection means, in particular a spectral photometer, for detecting a transmission value or a transmission spectrum and a reflection value or a reflection spectrum of the optical layer; and
a processor for determining the optical property based on the transmission value or the transmission spectrum, the reflection value or the reflection spectrum and a parameterisable optical model of the optical layer.

Fig. 1

Fig. 2

Fig. 3

Fig.4

European Patent Office

**EUROPEAN SEARCH REPORT**

Application Number

EP 08 00 9845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERLAUTO A S ET AL: "Analytical model for the optical functions of amorphous semiconductors and its applications for thin film solar cells" THIN SOLID FILMS, ELSEVIER-SEQUOIA S.A. LAUSANNE, CH, vol. 455-456, 1 May 2004 (2004-05-01), pages 388-392, XP004504814 ISSN: 0040-6090 * figures 1-4; table 1 * * paragraphs [001.] - [003.] * ----- | 1-13 | INV. G01N21/84 G01B11/06 |
| X | US 2002/191192 A1 (PATZWALD MATTHIAS [DE] ET AL) 19 December 2002 (2002-12-19) * paragraphs [0006] - [0020] * * paragraphs [0025] - [0029] * * paragraphs [0047] - [0052]; figure 1 * ----- | 1-13 | |
| A | FERLAUTO A S ET AL: "Analytical model for the optical functions of amorphous semiconductors from the near-infrared to ultraviolet: Applications in thin film photovoltaics" JOURNAL OF APPLIED PHYSICS, AMERICAN INSTITUTE OF PHYSICS. NEW YORK, US, vol. 92, no. 5, 1 September 2002 (2002-09-01), pages 2424-2436, XP012057136 ISSN: 0021-8979 * paragraphs [II.A], [II.B], [III.], [00V.]; figure 4 * ----- | 1-13 | TECHNICAL FIELDS SEARCHED (IPC) G01N G01B |

-/--

The present search report has been drawn up for all claims

| Place of search | Date of completion of the search | Examiner |
|---|---|---|
| Munich | 26 September 2008 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................
& : member of the same patent family, corresponding document

EPO FORM 1503 03.82 (P04C01)

**European Patent Office**

**EUROPEAN SEARCH REPORT**

Application Number

EP 08 00 9845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MROZ B ET AL: "Influence of hydrogen on optical properties of LPCVD amorphous silicon films" CONFERENCE RECORD OF THE 26TH IEEE PHOTOVOLTAIC SPECIALISTS CONFERENCE 19970929; 19970929 - 19971003 NEW YORK, NY : IEEE, US, 29 September 1997 (1997-09-29), pages 671-673, XP010267874 ISBN: 978-0-7803-3767-1 * page 671 * ----- | 1-13 | |

TECHNICAL FIELDS SEARCHED (IPC)

The present search report has been drawn up for all claims

| Place of search | Date of completion of the search | Examiner |
|---|---|---|
| Munich | 26 September 2008 | Consalvo, Daniela |

EPO FORM 1503 03.82 (P04C01)

## ANNEX TO THE EUROPEAN SEARCH REPORT
## ON EUROPEAN PATENT APPLICATION NO.

EP 08 00 9845

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2008

| Patent document cited in search report | Publication date | Patent family member(s) | | Publication date |
|---|---|---|---|---|
| US 2002191192 A1 | 19-12-2002 | DE | 10123470 A1 | 21-11-2002 |
| | | FR | 2824902 A1 | 22-11-2002 |
| | | GB | 2380258 A | 02-04-2003 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1632746 A
- US 20060007430 A

**Non-patent literature cited in the description**

- **F. Jellison ; Modene.** Parameterization of the optical functions of amorphous materials in the inter band region. *Applied Physics Letters,* 15 July 1996, vol. 69 (3
- *Applied Physics Letters,* 13 September 1996